# EUROPEAN PATENT SPECIFICATION

(11) **EP 4 516 594 B1**
(45) Date of publication and mention of the grant of the patent: **15.04.2026**
(21) Application number: 23194071.9
(22) Date of filing: 29.08.2023
(51) Int. Cl.: B60R 11/04

(54) **VEHICLE ROOF MODULE FOR A SENSOR**
FAHRZEUGDACHMODUL FÜR EINEN SENSOR
MODULE DE TOIT DE VÉHICULE POUR UN CAPTEUR

(43) Date of publication of application: 05.03.2025
(73) Proprietor: Inalfa Roof Systems Group B.V., 5807 GW Oostrum (NL)
(72) Inventor: ALBERS, Thomas Anton Martijnszoon, 5804 XJ Venray (NL); NELLEN, Marcel Johan Christiaan, 5815 AR MERSELO (NL); GEURTS, Ruud, 5988 HA Helden (NL); KLEFISCH, Marcel, 41239 Mönchengladbach (DE)
(74) Representative: De Vries & Metman

(56) References cited:
- WO-A1-2022/261802
- US-A1- 2023 123 315
- US-A1- 2023 158 966

## Description

The present invention relates to a vehicle roof module and in particular to a vehicle roof module for a sensor that is to be mounted on top of a vehicle roof.

### BACKGROUND

In support of driving assistance for vehicles and for the further aim of supporting autonomous driving of vehicles, sensors for image recognition, for example of road and traffic signs, are being mounted on such vehicles. Thereto, the sensor may be placed within a housing on top of a roof of a vehicle to provide a wide field of view. The housing may be part of a vehicle roof module and may also be referred to as an exterior sensor module. The housing or roof module will have a front screen or visor to provide a light sensitive sensor, such as a LiDAR sensor, with an unobstructed field of view. As with any other exterior part of a vehicle, the module will be exposed to weather and environmental conditions. And it may further be prone to damage.

US 2023/123315 is related to a motor vehicle roof module having a panel component whose outer surface at least partially forms the roof skin of the vehicle roof and serves as an outer sealing surface of the roof module, and at least one environmental sensor by means of which a vehicle environment can be detected during autonomous or semi-autonomous driving of the motor vehicle. The roof module has a kinematic system having a drive and configured to move the at least one environmental sensor from a retracted position into a deployed position, in which the at least one environmental sensor protrudes beyond the roof skin to detect the vehicle environment, and to fix the at least one environmental sensor at least in the deployed position in such a manner that the at least one environmental sensor cannot be moved by an external force.

### SUMMARY OF INVENTION

In order to ensure proper operation over time, there is a need to provide a roof module that may withstand the above-mentioned conditions. It is an object of the invention to alleviate the impact of the abovementioned risks.

According to the invention, this object is achieved by providing a vehicle roof module for a sensor, configured to be mounted on a roof of a vehicle.

According to one aspect, a roof module is provided including a roof skin having an opening and defining an exterior side and an interior side of the roof module. The roof module further including a sensor mounting location, arranged at the interior side, having a visor providing a field of view through the opening; a cover panel movable along a sliding path. And a kinematic mechanism for moving the cover panel along the sliding path between a closed position wherein the cover panel covers the opening and blocks the field of view of the visor, and a retracted position wherein the cover panel uncovers the opening and clears the field of view of the visor.

According to another aspect, the cover panel of the roof module is movable into at least one intermediate position, the at least one intermediate position being along the sliding path between the retracted position and the closed position. And wherein the at least one intermediate position maintains, at least partially, the field of view for the visor.

According to yet another aspect, the roof module is provided with a kinematic mechanism having a sliding assembly.

According to a further aspect, the roof module is provided with a kinematic mechanism having a lifting assembly.

According to yet a further aspect, the roof module is provided with a NVH detection unit/means for detection of Noise, Vibration, and/or Harshness.

Particular embodiments of the invention are set forth in the dependent claims.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1 illustrates a perspective view of an example of vehicle roof and a roof module;
FIGS. 2A and 2B illustrate an example of a vehicle roof module in different states in accordance with the invention;
FIG. 3 shows a cross section of an example of a roof module in accordance with the invention.
FIG. 4 illustrates an exploded view of components making up the roof module of Fig. 3;
FIGS. 5A and 5B illustrate an example of a kinematic mechanism of the roof module of Fig. 3 in a closed position and a retracted position;
FIGS. 6A-6C illustrate the kinematic movement of the roof module of Fig. 3;
FIGS. 7A and 7B illustrate another example of an embodiment of a vehicle roof module in different states in accordance with the invention;
FIG. 8 illustrates an exploded view of components making up the roof module of Figs. 7B;
FIGS. 9A-9C illustrate the kinematic movement of the roof module of Fig. 8; and

FIIG. 10 illustrates yet another example of an embodiment of a vehicle roof module in accordance with the invention.

### DETAILED DESCRIPTION

In the following description spatial references as, for example, front, side and rear, or underneath, below and above, or forward and rearward direction, are made with regard to the general orientation of a vehicle, such as a passenger car. And in particular to a driver behind a steering wheel of such as vehicle.

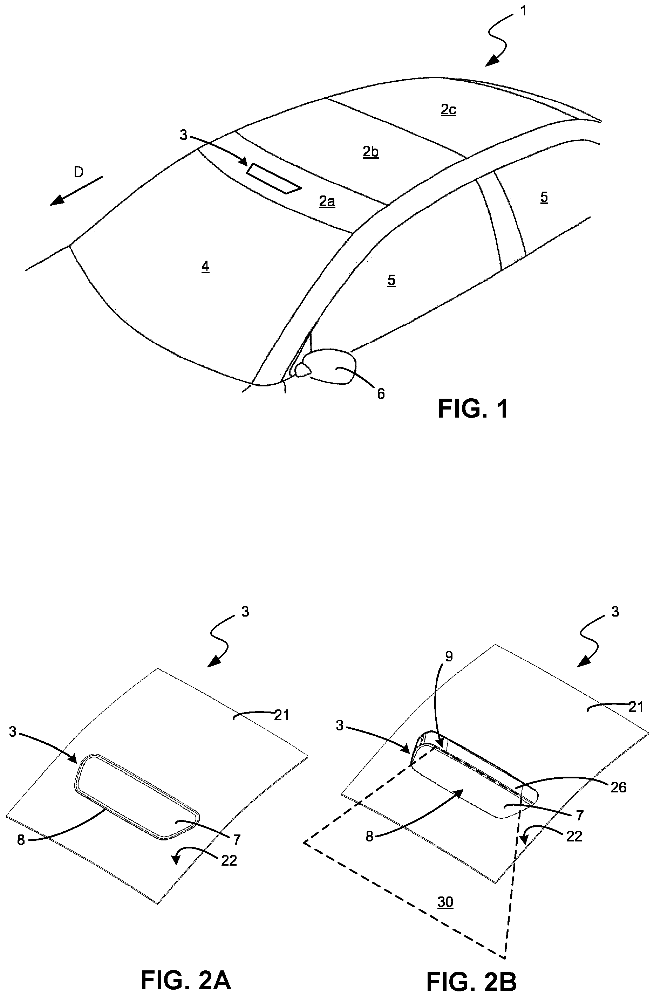

Referring to Fig. 1, a perspective view of an example of a vehicle is schematically illustrated. The vehicle is oriented with a forward direction of driving as indicated by arrow D. The vehicle 1 includes a roof 2, in this example consisting of several roof panels 2a, 2b, 2c. One or more of the roof panels 2a-c may be part of an open roof assembly. A vehicle roof module 3 for a sensor is mounted on one of the roof panels, and in this embodiment integrated with a first or forward panel 2a of the vehicle roof. The vehicle roof module 3 is illustrated as integrated in roof panel 2a, which roof panel 2a in some embodiments may be considered part of the roof module. Further shown are vehicle front window 4, side windows 5 and side mirror 6. The vehicle roof module 3 on top of the roof may also be referred to as an external sensor module.

Referring to Figs. 2A and 2B, the vehicle roof module 3 is illustrated as a separate component 3. The roof module 3 includes a roof skin 21 having an opening 8. The roof skin defines an exterior side 22 and an interior side 23 of the roof module 3. The roof module 3 further includes a sensor mounting location 25, arranged at the interior side 23, that includes a visor 26. The visor 26 provides a field of view 30 through the opening 8. The roof module 3 further includes a cover panel 7 having dimensions that correspond to the opening 8 in the roof skin 21 of the roof panel 2a. More in particular, the opening 8 has an inner perimeter and the cover panel 7 has an outer perimeter corresponding to the inner perimeter of the opening 8. The cover panel 7 is movable between a closed position in Fig. 2A and a retracted position in Fig. 2B. In the closed position shown in Fig.2A, the cover panel 7 covers i.e. closes off the opening 8 in the roof panel 2a and blocks he field of view 30. In the retracted position shown in Fig. 2B, the cover panel 7 uncovers the opening 8 and clears the field of view 30 of the visor 26. In this embodiment, the cover panel 7 in the retracted position may reside beneath the roof skin and/ or front panel 2a. In the retracted position, the cover panel 7 uncovers the opening 8 and exposes an inner recess 9 of the roof module 3. Therewith it clears the field of view 30 for a sensor that may be mounted at the sensor mounting location 25, or at least provides a clear field of view through the visor 26 to the exterior side 22. The sensor may be a LiDAR sensor, or any other optical sensor.

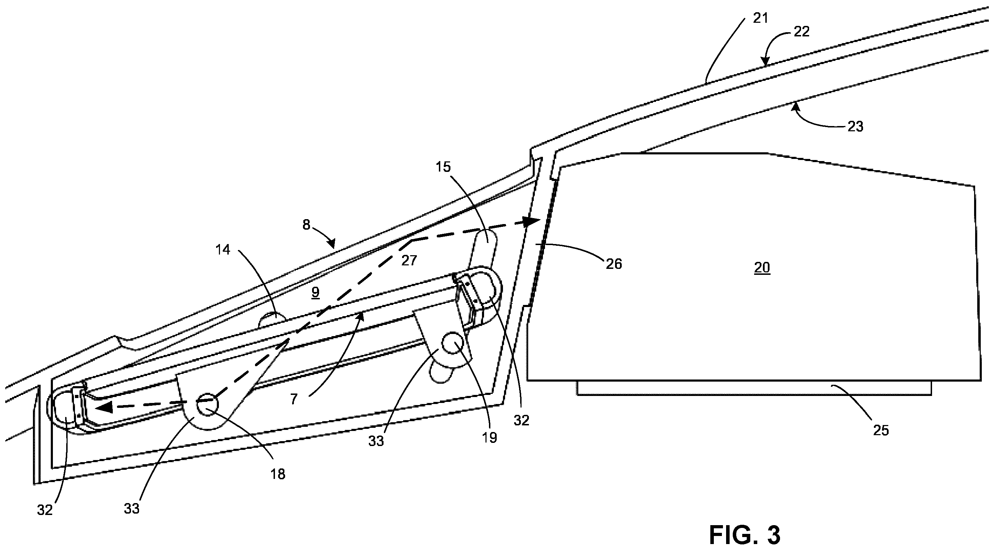

Referring to Fig. 3, the vehicle roof module 3 shown in cross section illustrates more detail of the module. It further shows the roof skin 21 defining the exterior side 22 and the interior side 23 in relation to the opening 8. The roof module 3 further includes the inner recess 9 adjacent the opening 8 on the interior side 23 of the roof skin 21. And the sensor mounting location 25 arranged at the interior side 23 of the roof module 3, separated from the inner recess 9 by the visor 26. The sensor mounting location 25 may be provided as a frame and equipped with bolting holes or other means for securing the sensor. As mentioned, the cover panel 7 is movable between the retracted position wherein, in this embodiment, the cover panel 7 resides within the inner recess 9 and the closed position wherein the cover panel 7 covers the opening 8. In the closed position, the cover panel 7 may be substantially flush with the roof skin 21. When moved between the retracted position and the closed position, the cover panel 7 travels along a virtual sliding path 27, indicated by a dotted line.

The cover panel 7 further is provided with a bump seal 32 running along the outer perimeter thereof. The cover panel 7 further includes support flanges 33 whereon sliding pins 18, 19 are provided.

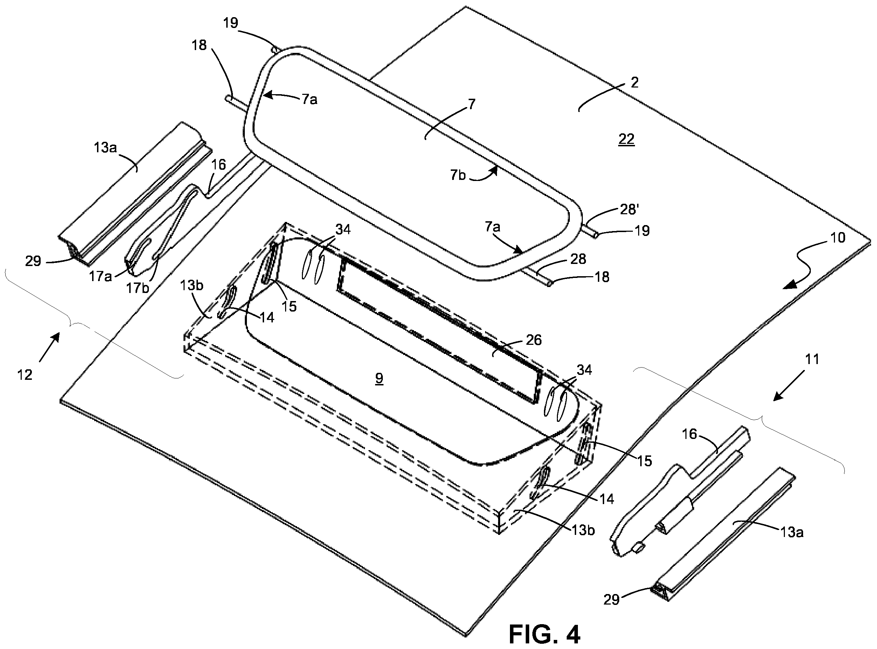

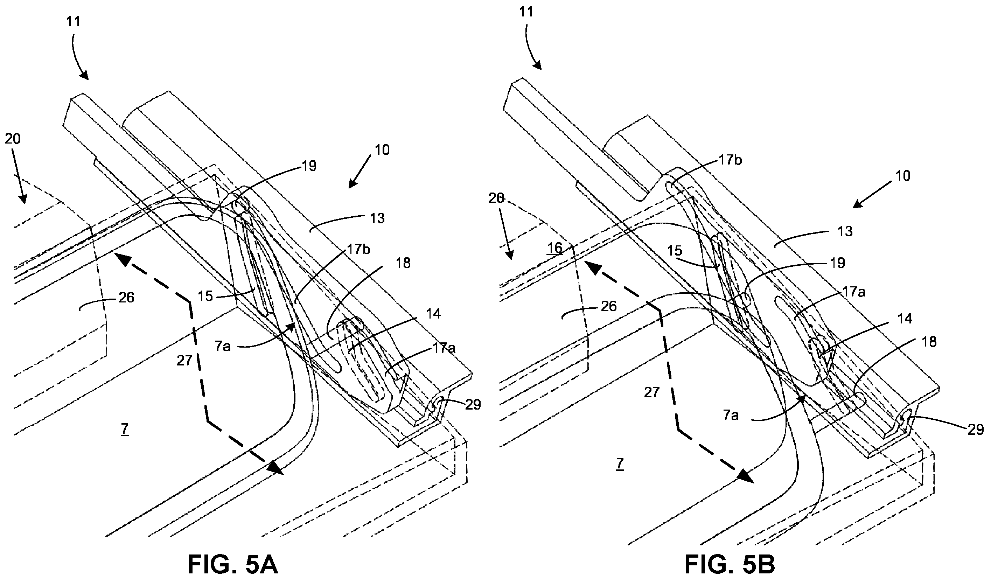

Further referring to Fig. 4, illustrating an exploded view of the roof module 3 with the cover panel 7 partially transparent for illustrative purposes, the cover panel 7 is shown to include at each of two respective opposite edges 7a at least one sliding pin respectively. In this embodiment a front sliding pin 18 and a rear sliding pin 19 on each of the two opposite edges 7a. The roof module 3 further includes a kinematic mechanism 10. The kinematic mechanism 10 consists of two sliding assemblies 11, 12 arranged in parallel at opposing sides of the inner recess 9, which inner recess is adjacent the opening 8. In between the sliding assemblies 11, 12 the cover panel 7 is located, hence the sliding assemblies 11, 12 are spaced apart to accommodate the movement of the cover panel 7 there between. The cover panel 7 faces each sliding assembly 11, 12 with a respective side edge 7a, see also Figs.5A-B. Each sliding assembly 11, 12 consists of a guide 13 having at least one locator curve, in this embodiment a first, front locator curve 14 and a second, rear locator curve 15. Each guide 13 further includes a slider channel 29. In this embodiment, each guide 13 is shown as consisting of a rail portion 13a and a wall portion 13b. Each sliding assembly 11, 12 further includes a driven slider 16 having at least one sliding track, in this embodiment a front sliding track 17a and a rear sliding track 17b. The slider channels 29 are for guiding each of the driven sliders 16 parallel to the opposing sides of the recess 9. The cover panel 7 is provided on each side edge 7a facing a respective sliding assembly 11, 12 with a first, front sliding pin 18 and a second, rear sliding pin 19. Two pins at respective opposite edges 7a of the cover panel 7 may be formed by outer portion ends of a single rod. In this example two front pins 18 are formed by rod 28. Likewise, two rear pins 19 may be formed by outer portion ends of a single rod 28'.

Referring to Figs. 5A and 5B, the roof module of Fig. 4 with sliding assembly 11 is shown in more detail. In Fig. 5A the kinematic mechanism 10 is illustrated with the cover panel 7 in the closed position, and Fig. 5B illustrates the kinematic mechanism 10 with the cover panel 7 in the retracted position. The at least one locator curve of the guide 13, in this embodiment a front locator curve 14 and a rear locator curve 15, and the at least one sliding track 17b are arranged for guiding the respective at least one sliding pin 18, 19, such that the cover panel 7 moves along the sliding path 27. When the cover panel 7 is moved from the closed position to the retracted position, the visor 26 and the sensor 20 positioned there behind will be provided with a clear field of view to the exterior side of the roof module.

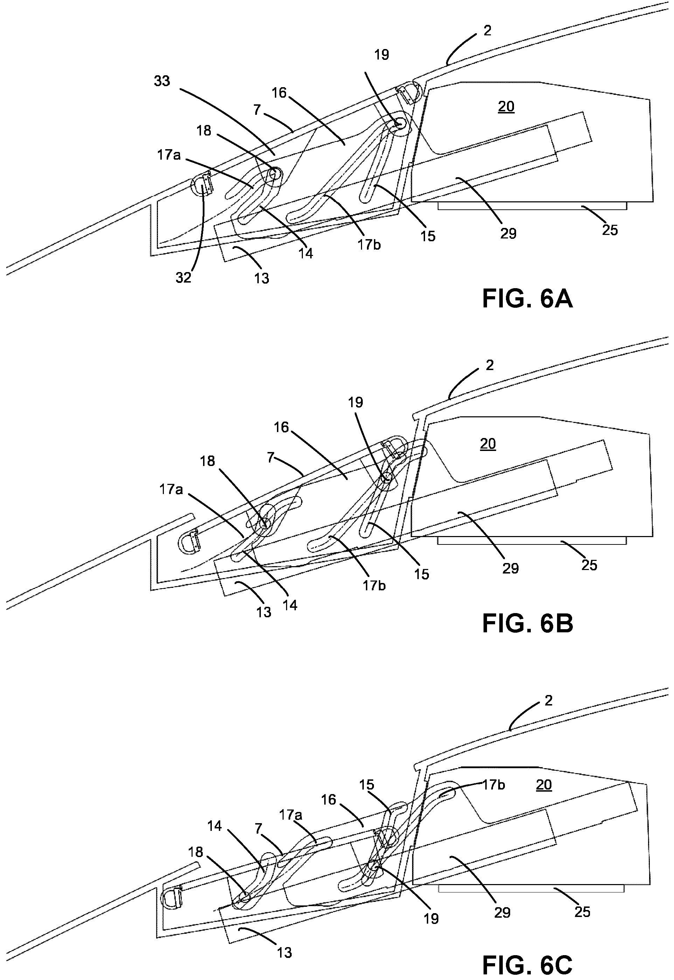

The co-operation of these components will be elucidated with further reference to Figs. 6A-6C. In Fig. 6A, as in Fig. 5A, the cover panel 7 is in the closed position. The driven slider 16 slider is in an closed position, in this drawing to the left side in the slider channel 29. Rear sliding pin 19 is in a top of the rear locator curve 15 of the guide 13, and simultaneously in a top of the sliding track 17b. While front sliding pin 18 is in a top of the front locator curve 14 of the guide 13.

Operating the driven slider 16 to move rearwardly, to the right in these figures, means that the rear sliding track 17a forces the rear sliding pin19 to move in the rear locator curve 15, downward and to the left in these figures, as can be seen in Fig. 6B. The movement of the driven slider, via the sliding tracks 17a, 17b, thus forces and/or pushes the front and rear sliding pins 18, 19 to travel through the respective front and rear locator curves 14, 15.

In Fig. 6C the cover panel 7 is in the retracted position. The driven slider 16 slider is in a retracted position, in this drawing to the right side in the slider channel 29. Rear sliding pin 19 is near a lower end of the rear locator curve 15 of the guide 13, and simultaneously near a lower end of the rear sliding track 17b. While front sliding pin 18 is near a lower end of the front locator curve 14 of the guide 13, and simultaneously near a lower end of the front sliding track 17a.

From the Figs. 6A-6C it will be clear that the front locator curve 14 and the rear locator curve 15 are arranged for respectively guiding the front sliding pin 18 and the rear sliding pin 19, while the sliding pins are pushed via the at least one sliding track 17a, 17b.

As will be understood, the motions of the components of the roof module described above may be performed in a reverse order to bring the cover panel back to the closed position.

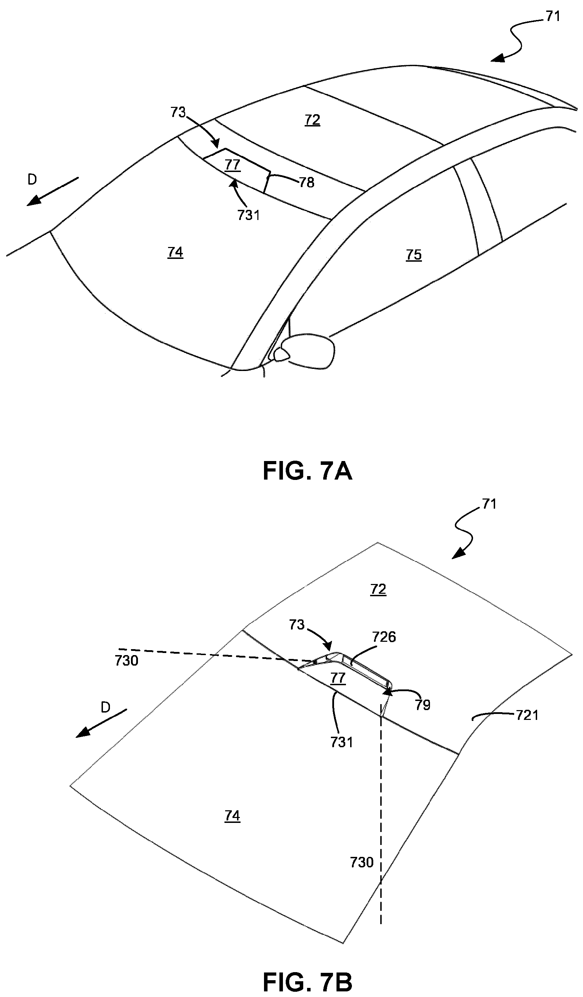

In the embodiments discussed in relation to Figs. 2-6, the cover panel 7 is intended to be moved forward and underneath the cover panel when placed into the retracted position. Hence, the cover panel will then be located at the interior side of the roof module. Hower, in other embodiments the cover panel may brought to the exterior side when in the retracted position. In the following embodiments, this will be described in relation to Figs. 7-9.

Referring to Figs. 7A and 7B, a perspective view of an example of a vehicle top side 71 is schematically illustrated. The vehicle is oriented with a forward direction of driving as indicated by arrow D. The vehicle top side 71 includes a roof 72. Another embodiment of the vehicle roof module 73 for a sensor is mounted on the roof 72. Further shown are vehicle front window 74 and side windows 75. In contrast to the embodiment illustrated in Fig. 1, a front edge 731 of the roof module 73 is closer and adjacent to the top edge of the front window 74. The roof module 73, just as the roof module 3 of Fig. 4, includes a roof skin 721 having an opening 708. The roof skin 721 again defines the exterior side 22 and the interior side 23 of the roof module 73. The roof module 73 again includes the sensor mounting location 725, arranged at the interior side 23, that includes a visor 726. The visor 726 provides the field of view 730 through the opening 78, as indicated by dotted lines in Fig. 7B. The roof module 73 further includes a cover panel 77 having dimensions that correspond to the opening 78 in the roof skin 721 of the roof panel 72. Also in this embodiment, the opening 78 has an inner perimeter and the cover panel 77 has an outer perimeter corresponding to the inner perimeter of the opening 78. The cover panel 77 is movable between the closed position in Fig. 7A and the retracted position in Fig. 7B. In the closed position shown in Fig.7A, the cover panel 77 covers i.e. closes off the opening 78 in the roof panel 2 and blocks he field of view 730. In the retracted position shown in Fig. 7B, the cover panel 77 uncovers the opening 78 and clears the field of view 730 of the visor 726. In this embodiment, the cover panel 7 in the retracted position resides above the roof skin 721 and may extend forward slightly over front window 74. In the retracted position, the cover panel 77 uncovers the opening 78 and exposes the inner recess 79 of the roof module 73. Therewith it clears the field of view 730 for a sensor that may be mounted at the sensor mounting location 725, or at least provides a clear field of view through the visor 726 to the exterior side 22. Again, the sensor may be a LiDAR sensor, or any other optical sensor.

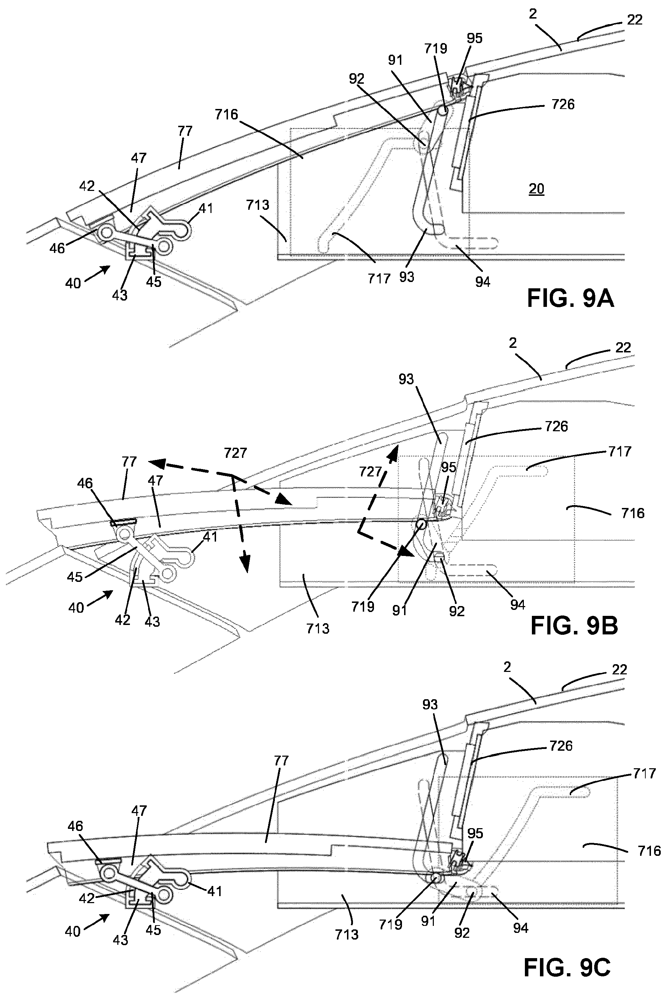

The description referring to Fig. 3 setting out the relation between various components of the roof module 3 equally applies to the roof module 73 embodiment of Figs. 7A and 7B, with the exception that the cover panel 77 in the retracted position resides above the roof skin 721 of the roof panel 72. Thus, in the closed position, the cover panel 77 may be substantially flush with the roof skin 721. And when moved between the retracted position and the closed position, the cover panel 77 travels along a virtual sliding path 727, as will be explained below with reference to Figs. 9A-9C.

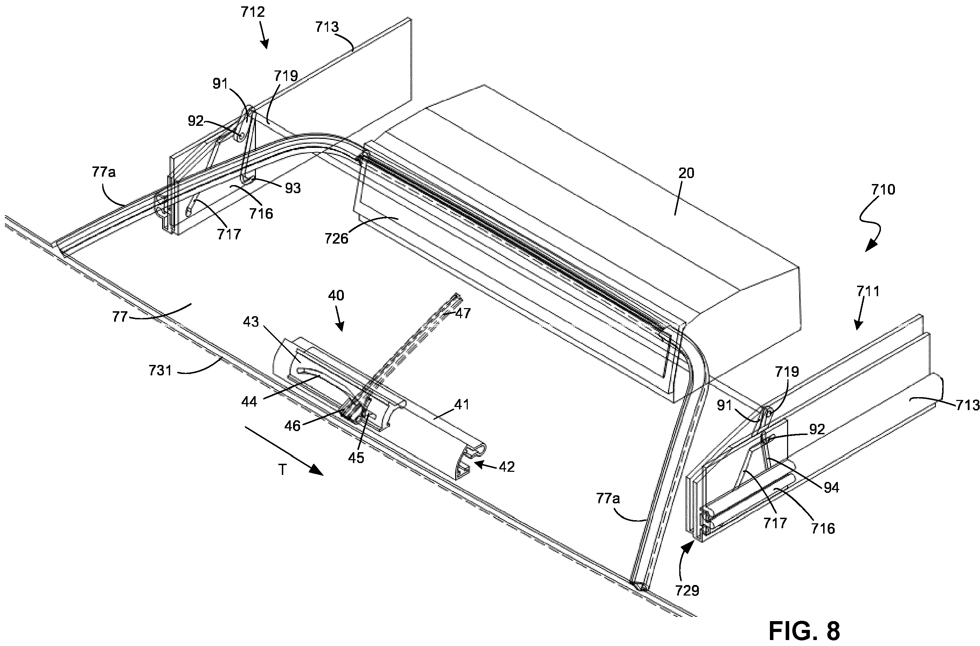

Referring to Fig. 8, illustrating an exploded view of the roof module 73 with the cover panel 77 partially transparent for illustrative purposes, the cover panel 77 is shown to include at each of two respective opposite edges 77a at least one sliding pin respectively. In this embodiment one rear sliding pin 719 on each of the two opposite edges 77a. The roof module 73 again includes the kinematic mechanism 710. The kinematic mechanism 710 consists of two sliding assemblies 711, 712 arranged in parallel at opposing sides of the inner recess 79, which inner recess is adjacent the opening 78. In between the sliding assemblies 711, 712 the cover panel 77 is located, hence the sliding assemblies 711, 712 are spaced apart to accommodate the movement of the cover panel 77 there between. The cover panel 77 faces each sliding assembly 711, 712 with respective side edge 77a. Each sliding assembly 711, 712 consists of a guide 713 having at least one locator curve, in this embodiment, the at least one locator curve includes two rear locator curves 93, 94. Each guide 13 further includes the slider channel 729. Each sliding assembly 711, 712 again includes the driven slider 716 having at least one sliding track 717. The slider channels 729 are for guiding each of the driven sliders 716 parallel to the opposing sides of the recess 79. The cover panel 77 is provided on each side edge 77a facing one respective sliding assembly 711, 712 with the rear sliding pin 719. Two pins at respective opposite edges 77a of the cover panel 77 may be formed by outer portion ends of a single rod. In this example, this is not the case.

In order to have the cover panel 77 move above the roof panel 72, the kinematic mechanism 710 further includes a lifting assembly 40. The lifting assembly 40 including a transverse guide 41 having a second slider channel 42. The lifting assembly 40 further includes a lift slider 43 having a lifting curve 44 and is arranged for sliding along the slider channel 42. The lifting assembly 40 further includes a lift lever 45 having a slide shoe 46 at a tip for movably sliding a rail 47 that is connected to the cover panel 77.

Herein the lift lever 45 is arranged to be lifted upwards and/or downwards by the lifting curve 44 when the lift slider 43 is moved along the slider channel 42 of the transverse guide 41. When moved in direction as indicated by arrow, the lift lever 45 will be lifted up by the lifting curve 44. When moved in opposite direction of arrow T, the lift lever 45 will lifted down. In this manner, the lever 45 may be lifted between a closed, resting position and an opened, raised position. Furthermore, the rail 47 is arranged to move through the slide shoe 46 when the lever 45 is lifted upwards and/or downwards. Accordingly, the single transverse movement of the slider enables an up/down lifting movement. The movement of the slider may be controlled by a single drive cable, which same drive cable may be used to control the driven slider of the sliding assembly. Hence, only a single motor may be required for operating the drive cable, while enabling the elaborate, yet elegant movement of the cover panel.

Though in itself, such an additional lifting assembly as disclosed may be sufficient to provide a desired sliding path for bringing the cover panel in the retracted position that is exterior of the roof module, the sliding assembly as described thus far may be further expanded.

Thereto, each sliding assembly 711, 712 of the kinematic mechanism 710 further includes a pulling lever 91. The pulling lever 91 includes at one end at least one pulling pin 92 and at another end is connected to at least one the sliding pin 719 of the cover panel 77. In this embodiment, the at least one locator curve 93, 94 and the at least one sliding track 717 are further arranged for guiding the respective at least one sliding pin 719 and the pulling pin 92, such that the cover panel 77 moves along the sliding path 727. More in particular, in this embodiment, a front portion of the cover panel travels along a first portion of the sliding path 727, and a rear portion of the cover panel travels along a second portion of the sliding path 727. When the cover panel 77 is moving from the closed position to the retracted position, the first portion of the sliding path runs upwards and forwards, while the second portion runs substantially downwards, whereafter the whole cover panel moves rearwards.

The co-operation of the components making up the kinematic mechanism of the embodiment of Figs.7-8 will be elucidated with further reference to Figs. 9A-9C. In Fig. 9A, the cover panel 77 is in the closed position.

In Fig. 9A, the lifting assembly 40 is in a closed position wherein it rests at one end of the lifting curve 44. The driven slider 716 is in the closed position, in this drawing to the left side in the slider channel 729. Rear sliding pin 719 is in a top of the rear locator curve 93 of the guide 713. The pulling pin 92 is in a top of a pulling locator curve 94 and simultaneously in a top of the sliding track 717. The top of the pulling locator curve 94 is lower than the top of the rear locator curve 93. This allows to have the pulling pin lead the rear sliding pin via the pulling lever.

By moving the lift slider 43 in the direction T, as indicated in Fig. 8, the lift lever 45 is raised and a front edge or portion of the cover panel 77 is raised as the slide shoe 46 travels along rail 47, as seen in Fig. 9B. Subsequently, or simultaneously, depending on the chosen configuration, the driven slider 716 may be operated to move rearwardly, to the right in these figures, enabling the sliding track 717 to force the pulling pin 92 to move in the pulling locator curve 94. In turn, the pulling pin 92 respectively pulls via the puling lever 91 the thereto connected sliding pin 719 downward through the rear locator curve 93. The movement of the driven slider 716, via the sliding track 717, thus forces and/or pushes the pulling pin 92 and the sliding pin 719 to travel through the respective pulling locator curve 94 and the rear locator curve 93.

With the lift lever 45 in the raised position, the front edge of the cover panel 77 may stick out and extend over the roof panel 2. As this may result in drag or wind noise, the extent to which the front edge sticks out, the cover panel may be pulled in rear ward direction by moving the pulling pin further through the pulling locator curve 94. Accordingly, in Fig. 9C the cover panel 77 is in the retracted position. The driven slider 716 slider is in the retracted position, in this drawing to the right side in the slider channel 729. Rear sliding pin 719 is near a lower part of the rear locator curve 715 of the guide 713. The pulling pin 92 is in a lower end portion of the pulling locator curve 94 and simultaneously near a lower portion of the sliding track 717. The lower end portion of the pulling locator curve 94 is lower than the lower part of the rear locator curve 93. The movement of This allows to have the pulling pin pull the cover panel rearward via the pulling lever.

From the Figs. 9A-9C it will be clear that the rear locator curve 93 and the pulling locator curve 94 are arranged for respectively guiding the rear sliding pin 719 and the pulling pin 92, while the pulling pin is pushed via the at least one sliding track 717. The arrangement of these curves is such that when the front portion of the cover panel is raised, the cover panel is lowered and pulled rearward.

As will be understood, the motions of the components of the roof module described above may be performed in a reverse order to bring the cover panel back to the closed position.

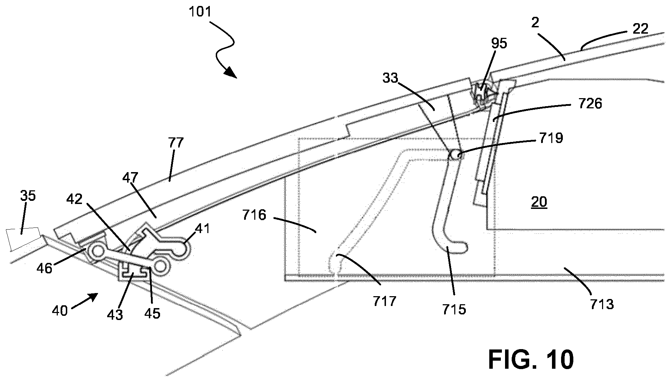

As may be understood, the pulling lever, pulling pin, and pulling locator curve may be dispensed with to obtain a configuration having less components. Such an embodiment is illustrated in Fig. 10. Herein, elements corresponding to those of Figs. 9A-9C have the same references. The roof module 101 is mounted on the roof 2, and includes cover panel 77. A sensor 20 is provided within the roof module 101. The roof module further includes lifting assembly 40, similar to that of Fig. 8. The roof module includes a sliding assembly 1011 different from that of Fig. 8, as the pulling lever and associated components are dispensed with. Accordingly, the movement of the front portion of the cover panel is similar to that as explained in relation to Figs. 9A-9C. The movement of the rear portion of the cover panel is similar to that as explained in relation to Fig. 6A-6C. Whereas the rearward pulling motion of the whole cover panel is of Figs. 9A-9C is absent, or at least less articulated.

In order to provide means for cooling, the inner recess may include openings adjacent the visor that allow air to move into the interior of the module towards the sensor. These cooling openings further separate the sensor mounting frame from the inner recess. When the cover panel in the closed position it may cover the cooling openings. This as to preserve an aesthetic appearance when the sensor is not in operation. Cooling openings in the shape of slits, circles, ellipses or other suitable shape may be provided. For example in the embodiment of Fig. 4, the roof module is further provided with cooling openings or vents 34, which further separate the sensor mounting frame from the inner recess 9. The cooling openings 34 are provided such that the cover panel 7 in the covering position, covers the cooling openings 34 from the exterior side. When the cover panel is in the retracted position and a sensor mounted in the roof module is operating, these vents or openings provide additional means for convection of heat potentially coming from operation of the sensor and control unit thereof.

In another embodiment, the cover panel may provide for a wiping function. Thereto, the cover panel 7 may include a wiper blade 95 adjacent one edge 7b of the cover panel 7 facing the visor 26. This may allow the kinematic mechanism to be arranged such that the wiper blade is able to wipe the visor when the cover panel is being moved along the sliding path. In another embodiment, the cover panel 7 may be provided with means to bring the wiper blade in a position that engages the wiper and a position disengaging from the visor. This allows to control the wiping action and activate wiping functionality only if and/or when desired. Again referring to Figs. 9A-9C, the cover panel 77 further includes the wiper blade 95, which is adjacent one edge 7b facing the visor 26. The locator curves are arranged such that when the cover panel moves along a portion of the sliding path 727, the wiper blade 95 may engage the visor 26 and perform a cleaning action. Also in the embodiment of Fig 10, the cover panel 77 is provided with the wiper blade 95.

In addition to the wiper blade, or alternatively, the cover panel 7 may be provided with one or more cleaning nozzles. Which, when activated, allows the visor to be sprayed with a fluid, such as air or water, to enable cleaning of the visor. Alternatively, one or more cleaning nozzles may be provided within the recess and operated when the cover panel is in the retraced position. For example in Fig. 10, a nozzle 35 is positioned on the roof module. Without regard to the type and placement of nozzles, whether on or underneath the cover panel, it is preferred that such nozzles are mainly operated when the cover panel is in the retracted position, as this may allow headwind as e.g. during vehicle movement, to aid in dispersing fluid from the visor.

With the various examples of kinematic mechanisms as described above, it is also possible to have the cover panel in various positions along the virtual sliding path.

Accordingly, the cover panel 7 of Fig. 3 and the cover panel 77 of Fig. 10 may be movable into at least one intermediate position, the at least one intermediate position being along the respective sliding path 27, 727 between the retracted position and the closed position. And when in the at least one intermediate position, the position of the cover panel preferably maintains, at least partially, the field of view for the visor 26. Hence, the intermediate position of the cover panel is such that a sensor placed in the sensor mounting location 25 will preserve sight of the exterior surroundings.

Depending on the speed of the vehicle, the slant of the front window and other circumstances, the position of the cover panel may be manipulated to reduce e.g. wind noise, or it may be manipulated to improve drying of the visor through air flow, for example after a cleaning action or in case of rain. In order to detect such operational circumstances, the roof module may be further equipped with a control unit and a NVH detection unit or similar means for detection of Noise, Vibration, and/or Harshness. The NVH detection means may generate a signal indicative of a NVH parameter. The control unit is configured for moving the cover panel, in response to the NVH parameter exceeding a predetermined threshold, into one of the at least one intermediate position to reduce the NVH parameter. The NVH detection unit/means may include an acoustic sensor; and/or a vibration sensor; and/or an air flow sensor, such as a mass air flow sensor. Such a control unit may be part of the sensor that is to be mounted in the roof module.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. Vehicle roof module (3) for a sensor, configured to be mounted on a roof (2) of a vehicle, the roof module (3) comprising:
a roof skin (21) having an opening (8) and defining an exterior side (22) and an interior side (23) of the roof module;
a cover panel (7) movable along a sliding path (27);
**characterized in that** the vehicle roof module (3) comprises:
a sensor mounting location (25), arranged at the interior side (23), comprising a visor (26) providing a field of view through the opening (8);
a kinematic mechanism (10) for moving the cover panel (7) along the sliding path (27) between:
a closed position wherein the cover panel (7) covers the opening (8) and blocks the field of view of the visor (26); and
a retracted position wherein the cover panel (7) uncovers the opening (8) and clears the field of view of the visor (26).

2. Vehicle roof module according to claim 1, wherein the opening (8) has an inner perimeter and the cover panel (7) has an outer perimeter corresponding to the inner perimeter of the opening (8); and
wherein the cover panel (7) in the closed position is substantially flush with the roof skin (21).

3. Vehicle roof module according to claim 1 or 2, wherein
the cover panel (7) comprises at each of two opposite edges at least one respective sliding pin (18, 19);
the kinematic mechanism (10) comprises two sliding assemblies (11, 12) arranged in parallel at opposing sides of an inner recess (9) adjacent the opening (8) on the interior side (23), each sliding assembly (11, 12) comprising:
a driven slider (16) having at least one sliding track (17);
a guide (13) having at least one locator curve (14, 15) and a slider channel (29) for guiding the driven slider (16) parallel to the opposing sides of the inner recess (9); and
wherein the at least one locator curve (14,15) and the at least one sliding track (17a, 17b) are arranged for guiding the respective at least one sliding pin (18, 19), such that the cover panel (7) moves along the sliding path (27).

4. Vehicle roof module according to claim 3,
wherein the at least one sliding pin (18, 19) comprises a front sliding pin (18) and a rear sliding pin (19);
wherein the at least one locator curve comprises a front locator curve (14) and a rear locator curve (15); and
wherein the front locator curve (14) and the rear locator curve (15) are arranged for guiding respectively the front sliding pin (18) and the rear sliding pin (19).

5. Vehicle roof module according to claim 3 or 4,
wherein the at least one sliding track comprises a front sliding track (17a) and a rear sliding track (17b); and
wherein the front sliding track (17a) and the rear sliding track (17b) are arranged for guiding respectively the front sliding pin (18) and the rear sliding pin (19).

6. Vehicle roof module according to any of claim 3 - 5, wherein two sliding pins (18, 19) at respective opposite edges of the cover panel (7) are formed by outer portion ends of a single rod (28).

7. Vehicle roof module according to any of the preceding claims, wherein the cover panel (7,77) in the retracted position is located either at the interior side (23) or at the exterior side (22).

8. Vehicle roof module according to any of the preceding claims, wherein the kinematic mechanism (10,710) further comprises a lifting assembly (40), the lifting assembly (40) comprising:
a transverse guide (41) comprising a second slider channel (42);
a slider (43) having a lifting curve (44), the slider (43) arranged for sliding along the slider channel (42);
a lift lever (45) comprising a slide shoe (46) for movably sliding a rail (47) connected to the cover panel (7);
wherein the lift lever (45) is arranged to be lifted upwards and/or downwards by the lifting curve (44) when the slider (43) is moved along the slider channel (42) of the transverse guide (41); and
wherein the rail (47) is arranged to move through the slide shoe (46) when the lift lever (45) is lifted upwards and/or downwards.

9. Vehicle roof module according to any of the preceding claims, wherein each sliding assembly (11, 12, 711, 712) further comprises a pulling lever (91) and a pulling locator curve(94);
wherein the pulling lever (91) comprises at one end at least one pulling pin (92) and at another end is connected to at least one the sliding pin (19, 719) of the cover panel (7, 77); and
wherein the at least one locator curve (14,15, 93), the pulling locator curve (94) and the at least one sliding track (17a, 17b, 717) are further arranged for guiding the respective at least one sliding pin (19, 719) and the pulling pin (92), such that the cover panel (7,77) moves along the sliding path (27,727).

10. Vehicle roof module according to any of the preceding claims, wherein the cover panel (7, 77) further comprises a wiper blade (95) adjacent one edge (7b) facing the visor (26).

11. Vehicle roof module according to any of the preceding claims, further comprising cooling openings (34) further separating the sensor mounting frame from the inner recess; and
wherein the cover panel (7) in the covering position, covers the cooling openings (34).

12. Vehicle roof module according to any of the preceding claims, wherein the cover panel (7) is movable into at least one intermediate position, the at least one intermediate position being along the sliding path (27) between the retracted position and the closed position; and
wherein the at least one intermediate position maintains, at least partially, the field of view for the visor (26).

13. Vehicle roof module according to claim 12 further comprising:
at least one nozzle mounted on the cover panel (7) such that in one of the at least one intermediate position, the nozzle is aimed / directed at the visor (26); and
wherein moving the cover panel (7) along the sliding path (27) in and out of one of the at least one intermediate position aims/directs the nozzle at different areas of the visor (26).

14. Vehicle roof module according to claim 12 or 13, further comprising:
a control unit;
wherein the control unit is arranged for receiving a contamination signal indicative of contamination being present on the visor (26); and
wherein the control unit is further arranged for moving the cover panel (7), in response to receiving the contamination signal, into one of the at least one intermediate position to reduce contamination on the visor.

15. Vehicle roof module according to any of the preceding claims 12-14, further comprising:
NVH detection unit/means for detection of Noise, Vibration, and/or Harshness, the NVH detection means generating a signal indicative of a NVH parameter; and
a control unit;
wherein the control unit is configured for moving the cover panel (7, 77), in response to the NVH parameter exceeding a predetermined threshold, into one of the at least one intermediate position to reduce the NVH parameter; and
wherein the NVH detection unit/means comprises:
an acoustic sensor; and/or
a vibration sensor; and/or
an air flow sensor, such as a mass air flow sensor.

## Patentansprüche

1. Fahrzeugdachmodul (3) für einen Sensor, das zur Montage an einem Dach (2) eines Fahrzeugs konfiguriert ist, wobei das Dachmodul (3) aufweist:
eine Dachhaut (21), die eine Öffnung (8) hat und die eine Außenseite (22) und eine Innenseite (23) des Dachmoduls definiert,
eine Abdeckplatte (7), die entlang eines Verschiebewegs (27) bewegbar ist,
**dadurch gekennzeichnet, dass** das Fahrzeugdachmodul (3) aufweist:
eine Sensoranbringungsstelle (25), die an der Innenseite (23) angeordnet ist und ein Visier (26) aufweist, das ein Sichtfeld durch die Öffnung (8) bereitstellt,
einen Kinematik-Mechanismus (10) zum Bewegen der Abdeckplatte (7) entlang des Verschiebewegs (27) zwischen:
einer geschlossen-Position, in der die Abdeckplatte (7) die Öffnung (8) abdeckt und das Sichtfeld des Visiers (26) versperrt, und
einer zurückgeholt-Position, in der die Abdeckplatte (7) die Öffnung (8) nicht abdeckt und das Sichtfeld des Visiers (26) freigibt.

2. Fahrzeugdachmodul gemäß Anspruch 1, wobei die Öffnung (8) einen Innenumfang hat und die Abdeckplatte (7) einen Außenumfang hat, der zu dem Innenumfang der Öffnung (8) korrespondiert, und
wobei die Abdeckplatte (7) in der geschlossen-Position im Wesentlichen bündig mit der Dachhaut (21) ist.

3. Fahrzeugdachmodul gemäß Anspruch 1 oder 2, wobei
die Abdeckplatte (7) an jedem von zwei gegenüberliegenden Rändern mindestens einen jeweiligen Verschiebestift (18, 19) aufweist,
wobei der Kinematik-Mechanismus (10) zwei Verschiebebaugruppen (11, 12) aufweist, die parallel an gegenüberliegenden Seiten einer inneren Aussparung (9) benachbart der Öffnung (8) an der Innenseite (23) angeordnet sind, wobei jede Verschiebebaugruppe (11, 12) aufweist:
ein angetriebenes Verschiebeteil (16), das mit mindestens eine Verschiebebahn (17) hat,
eine Führung (13), die mindestens eine Positionierungskurve (14, 15) und einen Verschiebekanal (29) zum Führen des angetriebenen Verschiebeteils (16) parallel zu den gegenüberliegenden Seiten der inneren Aussparung (9) hat, und
wobei die mindestens eine Positionierungskurve (14, 15) und die mindestens eine Verschiebebahn (17a, 17b) zum Führen des jeweiligen mindestens einen Verschiebestifts (18, 19) angeordnet sind, so dass sich die Abdeckplatte (7) entlang des Verschiebewegs (27) bewegt.

4. Fahrzeugdachmodul gemäß Anspruch 3,
wobei der mindestens eine Verschiebestift (18, 19) einen vorderen Verschiebestift (18) und einen hinteren Verschiebestift (19) aufweist,
wobei die mindestens eine Positionierungskurve eine vordere Positionierungskurve (14) und eine hintere Positionierungskurve (15) aufweist, und
wobei die vordere Positionierungskurve (14) und die hintere Positionierungskurve (15) zum zugeordneten Führen des vorderen Verschiebestifts (18) und des hinteren Verschiebestifts (19) angeordnet sind.

5. Fahrzeugdachmodul gemäß Anspruch 3 oder 4,
wobei die mindestens eine Verschiebebahn eine vordere Verschiebebahn (17a) und eine hintere Verschiebebahn (17b) aufweist, und
wobei die vordere Verschiebebahn (17a) und die hintere Verschiebebahn (17b) angeordnet sind zum zugeordneten Führen des vorderen Verschiebestifts (18) und des hinteren Verschiebestifts (19).

6. Fahrzeugdachmodul gemäß irgendeinem der Ansprüche 3 - 5, wobei zwei Verschiebestifte (18, 19) an jeweils gegenüberliegenden Rändern der Abdeckplatte (7) durch Außenabschnitt-Enden einer einzigen Stange (28) gebildet sind.

7. Fahrzeugdachmodul gemäß irgendeinem der vorstehenden Ansprüche, wobei sich die Abdeckplatte (7, 77) in der zurückgeholt-Position entweder an der Innenseite (23) oder an der Außenseite (22) befindet.

8. Fahrzeugdachmodul gemäß irgendeinem der vorstehenden Ansprüche, wobei der Kinematik-Mechanismus (10, 710) ferner eine Hebebaugruppe (40) aufweist, wobei die Hebebaugruppe (40) aufweist:
eine Querführung (41), die einen zweiten Verschiebekanal (42) aufweist,
ein Verschiebeteil (43), das eine Hebekurve (44) hat, wobei das Verschiebeteil (43) angeordnet ist zum Verschieben entlang des Verschiebekanals (42),
einen Hebehebel (45), der einen Gleitschuh (46) aufweist zum bewegbaren Gleiten einer Schiene (47), die mit der Abdeckplatte (7) verbunden ist,
wobei der Hebehebel (45) so angeordnet ist, dass er durch die Hebekurve (44) nach oben und/oder unten angehoben wird, wenn das Verschiebeteil (43) entlang des Verschiebekanals (42) der Querführung (41) bewegt wird, und
wobei die Schiene (47) so angeordnet ist, dass sie sich durch den Gleitschuh (46) bewegt, wenn der Hebehebel (45) nach oben und/oder unten angehoben wird.

9. Fahrzeugdachmodul gemäß irgendeinem der vorstehenden Ansprüche, wobei jede Verschiebebaugruppe (11, 12, 711, 712) ferner einen Zughebel (91) und eine Zugpositionierungskurve (94) aufweist,
wobei der Zughebel (91) an einem Ende mindestens einen Zugstift (92) aufweist und an einem anderen Ende mit dem mindestens einen Verschiebestift (19, 719) der Abdeckplatte (7, 77) verbunden ist, und
wobei die mindestens eine Positionierungskurve (14, 15, 93), die Zugpositionierungskurve (94) und die mindestens eine Verschiebebahn (17a, 17b, 717) ferner zum Führen des jeweiligen mindestens einen Verschiebestifts (19, 719) und des Zugstifts (92) angeordnet sind, so dass sich die Abdeckplatte (7, 77) entlang der Verschiebebahn (27, 727) bewegt.

10. Fahrzeugdachmodul gemäß irgendeinem der vorstehenden Ansprüche, wobei die Abdeckplatte (7, 77) ferner ein Wischerblatt (95) aufweist, das zu einem dem Visier (26) zugewandten Rand (7b) benachbart ist.

11. Fahrzeugdachmodul gemäß irgendeinem der vorstehenden Ansprüche, das ferner Kühlöffnungen (34) aufweist, die den Sensoranbringungsrahmen weiter von der inneren Aussparung trennen, und
wobei die Abdeckplatte (7) in der Abdeckposition die Kühlöffnungen (34) abdeckt.

12. Fahrzeugdachmodul gemäß irgendeinem der vorstehenden Ansprüche, wobei die Abdeckplatte (7) in mindestens eine Zwischenposition bewegbar ist, wobei die mindestens eine Zwischenposition entlang der Verschiebebahn (27) zwischen der zurückgeholt-Position und der geschlossen-Position liegt, und
wobei die mindestens eine Zwischenposition das Sichtfeld für das Visier (26) zumindest teilweise aufrechterhält.

13. Fahrzeugdachmodul gemäß Anspruch 12, das ferner aufweist:
mindestens eine Düse, die an der Abdeckplatte (7) angebracht ist, sodass in einer der mindestens einen Zwischenposition die Düse auf das Visier (26) gezielt/gerichtet ist, und
wobei das Bewegen der Abdeckplatte (7) entlang der Verschiebebahn (27) in eine der mindestens einen Zwischenposition hinein und aus dieser heraus die Düse auf verschiedene Bereiche des Visiers (26) zielt/richtet.

14. Fahrzeugdachmodul gemäß Anspruch 12 oder 13, das ferner aufweist:
eine Steuereinheit,
wobei die Steuereinheit eingerichtet ist zum Empfangen eines Verschmutzungssignal, das eine Verschmutzung auf dem Visier (26) anzeigt, und
wobei die Steuereinheit ferner eingerichtet ist zum Bewegen der Abdeckplatte (7), als Reaktion auf das Empfangen des Verschmutzungssignals, in eine der mindestens einen Zwischenposition, um die Verschmutzung auf dem Visier zu reduzieren.

15. Fahrzeugdachmodul gemäß irgendeinem der vorstehenden Ansprüche 12 - 14, das ferner aufweist:
eine/ein NVH-Erfassungs-Einheit/Mittel zum Erfassen von Geräuschen, Vibrationen und/oder Rauheit, wobei das NVH-Erfassungs-Mittel ein Signal erzeugt, das einen NVH-Parameter anzeigt, und
eine Steuereinheit,
wobei die Steuereinheit konfiguriert ist zum Bewegen der Abdeckplatte (7, 77), als Reaktion darauf, dass der NVH-Parameter einen vorbestimmten Schwellenwert überschreitet, in eine der mindestens einen Zwischenposition, um den NVH-Parameter zu reduzieren, und
wobei die/das NVH-Erfassungs-Einheit/Mittel aufweist:
einen Akustiksensor und/oder
einen Vibrationssensor und/oder
einen Luftstromsensor, wie beispielsweise einen Luftstrommassensensor.

## Revendications

1. Module de toit de véhicule (3) pour un capteur, configuré pour être monté sur un toit (2) d'un véhicule, le module de toit (3) comportant :
un revêtement de toit (21) ayant une ouverture (8) et définissant un côté extérieur (22) et un côté intérieur (23) du module de toit ;
un panneau de recouvrement (7) mobile le long d'un chemin de coulissement (27) ;
**caractérisé en ce que** le module de toit de véhicule (3) comporte :
un emplacement de montage de capteur (25), agencé sur le côté intérieur (23), comportant une visière-écran (26) fournissant un champ de vision à travers l'ouverture (8) ;
un mécanisme cinématique (10) pour le déplacement du panneau de recouvrement (7) le long du chemin de coulissement (27) entre :
une position fermée dans lequel le panneau de recouvrement (7) recouvre l'ouverture (8) et bloque le champ de vision de la visière-écran (26) ; et
une position rétractée dans lequel le panneau de recouvrement (7) découvre l'ouverture (8) et dégage le champ de vision de la visière-écran (26).

2. Module de toit de véhicule selon la revendication 1, dans lequel l'ouverture (8) possède un périmètre interne et le panneau de recouvrement (7) possède un périmètre externe correspondant au périmètre interne de l'ouverture (8) ; et
dans lequel le panneau de recouvrement (7) dans la position fermée est sensiblement en affleurement avec le revêtement de toit (21).

3. Module de toit de véhicule selon la revendication 1 ou 2, dans lequel
le panneau de recouvrement (7) comporte, sur chacun parmi deux bords opposés, au moins une goupille coulissante (18, 19) respective ;
le mécanisme cinématique (10) comporte deux ensembles coulissants (11, 12) agencés en parallèle sur des côtés opposés d'un évidement interne (9) adjacent à l'ouverture (8) sur le côté intérieur (23), chaque ensemble coulissant (11, 12) comportant :
un coulisseau entraîné (16) ayant au moins une piste de coulissement (17) ;
un guide (13) ayant au moins une courbe de repérage (14, 15) et un canal de coulisseau (29) pour le guidage du coulisseau entraîné (16) parallèlement aux côtés opposés de l'évidement interne (9) ; et
dans lequel l'au moins une courbe de repérage (14, 15) et l'au moins une piste de coulissement (17a, 17b) sont agencées pour le guidage de l'au moins une goupille coulissante (18, 19) respective, de sorte que le panneau de recouvrement (7) se déplace le long du chemin de coulissement (27).

4. Module de toit de véhicule selon la revendication 3, dans lequel l'au moins une goupille coulissante (18, 19) comporte une goupille coulissante avant (18) et une goupille coulissante arrière (19) ;
dans lequel l'au moins une courbe de repérage comporte une courbe de repérage avant (14) et une courbe de repérage arrière (15) ; et
dans lequel la courbe de repérage avant (14) et la courbe de repérage arrière (15) sont agencées pour le guidage, respectivement, de la goupille coulissante avant (18) et de la goupille coulissante arrière (19).

5. Module de toit de véhicule selon la revendication 3 ou 4,
dans lequel l'au moins une piste de coulissement comporte une piste de coulissement avant (17a) et une piste de coulissement arrière (17b) ; et
dans lequel la piste de coulissement avant (17a) et la piste de coulissement arrière (17b) sont agencées pour le guidage, respectivement, de la goupille coulissante avant (18) et de la goupille coulissante arrière (19).

6. Module de toit de véhicule selon l'une quelconque des revendications 3 à 5, dans lequel deux goupilles coulissantes (18, 19), sur des bords opposés respectifs du panneau de recouvrement (7), sont formées par des extrémités de portion externe d'une tige unique (28).

7. Module de toit de véhicule selon l'une quelconque des revendications précédentes, dans lequel le panneau de recouvrement (7, 77) dans la position rétractée est situé soit sur le côté intérieur (23), soit sur le côté extérieur (22) .

8. Module de toit de véhicule selon l'une quelconque des revendications précédentes, dans lequel le mécanisme cinématique (10,710) comporte en outre un ensemble de levage (40), l'ensemble de levage (40) comportant :
un guide transversal (41) comportant un second canal de coulisseau (42) ;
un coulisseau (43) ayant une courbe de levage (44), le coulisseau (43) étant agencé pour un coulissement le long du canal de coulisseau (42) ;
un levier de levage (45) comportant un patin coulissant (46) pour le coulissement de manière mobile d'un rail (47) relié au panneau de recouvrement (7) ;
dans lequel le levier de levage (45) est agencé pour être levé vers le haut et/ou vers le bas par la courbe de levage (44) lorsque le coulisseau (43) est déplacé le long du canal de coulisseau (42) du guide transversal (41) ; et
dans lequel le rail (47) est agencé pour se déplacer à travers le patin coulissant (46) lorsque le levier de levage (45) est levé vers le haut et/ou vers le bas.

9. Module de toit de véhicule selon l'une quelconque des revendications précédentes, dans lequel chaque ensemble coulissant (11, 12, 711, 712) comporte en outre un levier de traction (91) et une courbe de repérage de traction (94) ;
dans lequel le levier de traction (91) comporte, à une extrémité, au moins une goupille de traction (92), et à une autre extrémité, est relié à au moins une goupille coulissante (19, 719) du panneau de recouvrement (7, 77) ; et
dans lequel l'au moins une courbe de repérage (14, 15, 93), la courbe de repérage de traction (94) et l'au moins une piste de coulissement (17a, 17b, 717) sont en outre agencées pour le guidage de l'au moins une goupille coulissante (19, 719) respective et de la goupille de traction (92), de sorte que le panneau de recouvrement (7, 77) se déplace le long du chemin de coulissement (27, 727).

10. Module de toit de véhicule selon l'une quelconque des revendications précédentes, dans lequel le panneau de recouvrement (7, 77) comporte en outre un balai d'essuie-glace (95) adjacent à un bord (7b) faisant face à la visière-écran (26).

11. Module de toit de véhicule selon l'une quelconque des revendications précédentes, comportant en outre des ouvertures de refroidissement (34) séparant également le cadre de montage de capteur par rapport à l'évidement interne ; et
dans lequel le panneau de recouvrement (7), dans la position de recouvrement, recouvre les ouvertures de refroidissement (34).

12. Module de toit de véhicule selon l'une quelconque des revendications précédentes, dans lequel le panneau de recouvrement (7) est mobile jusque dans au moins une position intermédiaire, l'au moins une position intermédiaire étant le long du chemin de coulissement (27) entre la position rétractée et la position fermée ; et dans lequel l'au moins une position intermédiaire conserve, au moins partiellement, le champ de vision pour la visière-écran (26).

13. Module de toit de véhicule selon la revendication 12 comportant en outre :
au moins une buse montée sur le panneau de recouvrement (7) de sorte que, dans l'une parmi l'au moins une position intermédiaire, la buse soit orientée/dirigée vers la visière-écran (26) ; et
dans lequel le déplacement du panneau de recouvrement (7) le long du chemin de coulissement (27) en entrée et en sortie de l'une parmi l'au moins une position intermédiaire oriente/dirige la buse vers différentes zones de la visière-écran (26).

14. Module de toit de véhicule selon la revendication 12 ou 13, comportant en outre : une unité de commande ;
dans lequel l'unité de commande est agencée pour la réception d'un signal de contamination indicatif de la présence d'une contamination sur la visière-écran (26) ; et
dans lequel l'unité de commande est en outre agencée pour le déplacement du panneau de recouvrement (7), en réponse à la réception du signal de contamination, jusque dans l'une parmi l'au moins une position intermédiaire pour réduire la contamination sur la visière-écran.

15. Module de toit de véhicule selon l'une quelconque des revendications 12 à 14 précédentes, comportant en outre :
une unité/un moyen de détection NVH pour la détection d'un bruit, de vibrations et/ou d'une rudesse, le moyen de détection NVH générant un signal indicatif d'un paramètre NVH ; et
une unité de commande ;
dans lequel l'unité de commande est configurée pour le déplacement du panneau de recouvrement (7, 77), en réponse au fait que le paramètre NVH dépasse un seuil prédéterminé, jusque dans l'une parmi l'au moins une position intermédiaire pour réduire le paramètre NVH ; et
dans lequel l'unité/le moyen de détection NVH comporte :
un capteur acoustique ; et/ou
un capteur de vibrations ; et/ou
un capteur de débit d'air, tel qu'un capteur de débit d'air massique.
